# EUROPÄISCHE PATENTSCHRIFT

(11) **EP 2 689 616 B1**
(45) Veröffentlichungstag und Bekanntmachung des Hinweises auf die Patenterteilung: **26.02.2020**
(21) Anmeldenummer: 12712248.9
(22) Anmeldetag: 26.03.2012
(51) Int. Cl.: G01S 5/02, H04W 64/00, H04M 1/725, H04W 84/12

(54) **ORTSABHÄNGIGE AUSWAHL EINES FUNKBASIERTEN LOKALISIERUNGSVERFAHRENS FÜR EIN MOBILES ENDGERÄT**
LOCATION-DEPENDENT SELECTION OF A RADIO-BASED LOCALIZATION METHOD FOR A MOBILE TERMINAL
SÉLECTION EN FONCTION DE LA POSITION D'UN PROCÉDÉ DE LOCALISATION RADIO POUR UN TERMINAL MOBILE

(30) Priorität: 25.03.2011 DE 102011006180
(43) Veröffentlichungstag der Anmeldung: 29.01.2014
(73) Patentinhaber: Vodafone Holding GmbH, 40213 Düsseldorf (DE)
(72) Erfinder: SCHUNK, Thorsten, 41379 Brüggen (DE)
(74) Vertreter: Jostarndt Patentanwalts-AG
(86) Internationale Anmeldenummer: PCT/EP2012/055347
(87) Internationale Veröffentlichungsnummer: WO 2012/130811

(56) Entgegenhaltungen:
- EP-A1- 1 443 791
- US-A1- 2006 052 115
- US-A1- 2008 247 344
- US-A1- 2010 255 856
- ZHUANG Z ET AL: "Improving energy efficiency of location sensing on Smartphones", PROCEEDINGS OF THE 8TH INTERNATIONAL CONFERENCE ON MOBILE SYSTEMS, APPLICATIONS, AND SERVICES (MOBISYS 2010), SAN FRANCISCO, CALIFORNIA, USA, JUNE 15-18, 2010, ACM, 15. Juni 2010 (2010-06-15), XP002599758, ISBN: 978-1-60558-985-5
- KAISEN LIN ET AL: "Energy-accuracy trade-off for continuous mobile device location", PROCEEDINGS OF THE 8TH INTERNATIONAL CONFERENCE ON MOBILE SYSTEMS, APPLICATIONS, AND SERVICES, MOBISYS '10, 1. Januar 2010 (2010-01-01), Seite 285, XP55027894, New York, New York, USA DOI: 10.1145/1814433.1814462 ISBN: 978-1-60-558985-5
- QUALCOMM EUROPE: "Automatic Measurement Collection for RF optimization", 3GPP DRAFT; R3-072118 AUTOMATIC MEASUREMENT COLLECTION FOR RF OPTIMIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG3, Nr. Jeju Island; 20071031, 31. Oktober 2007 (2007-10-31), XP050162906, [gefunden am 2007-10-31]

## Beschreibung

Die Erfindung befasst sich mit der funkbasierten Lokalisierung von Endgeräten. Insbesondere betrifft die Erfindung ein Verfahren und System zum Lokalisieren eines Endgeräts.

Zum Lokalisieren von mobilen Endgeräten, wie beispielsweise Smartphones, Notebookcomputern und anderen mobilen Kommunikationsendgeräten, sind eine Reihe von funkbasierten Messverfahren bekannt, mit denen die Position eines Endgeräts anhand von empfangenen Funksignalen approximativ bestimmt werden kann. Derartige Verfahren umfassen die Lokalisierung mittels des satellitengestützten GPS (Global Positioning System) oder ähnlicher Satellitennavigationssysteme. Die satellitengestützte Lokalisierung kann durch die Berücksichtigung zusätzlicher Informationen erweitert werden. Ein Beispiel hierfür sind Informationen über die Zelle eines zellularen Mobilfunknetzes, in dem sich das zu lokalisierende Endgerät befindet. Bei einer Erweiterung des GPS durch Hinzuziehung derartiger Informationen spricht man auch von Assisted GPS (A-GPS). Darüber hinaus können in den Endgeräten empfangene Signale von Zugangspunkten zu Funknetzen zur Lokalisierung herangezogen werden. Einige solcher Verfahren, die hierin als funknetzbasierte Verfahren bezeichnet werden, verwenden Basisstationen von Mobilfunknetzen als Zugangspunkte. Bei weiteren funknetzbasierten Verfahren werden Funksignale von Wifi- bzw. WLAN (Wireless Local Area Network)-Zugangspunkten zur Lokalisierung von Endgeräten herangezogen (die Begriffe Wifi und WLAN werden hierin synonym verwendet).

Gegenüber der Lokalisierung mittels Satellitennavigationssystemen haben funknetzbasierte Verfahren bei entsprechender Abdeckung des Gebiets, in dem sich das zu lokalisierende Endgerät befindet, durch das Funknetz den Vorteil, dass die Lokalisierung auch innerhalb von Gebäuden, insbesondere Kaufhäusern, Einkaufszentren, Messehallen, Flughäfen und dergleichen, möglich ist, wo die Signale von Satellitennavigationssystemen oftmals nicht empfangen werden können. Zudem kann die Position des Endgeräts insbesondere in dicht bebauten Gebieten mit schlechten Empfangsbedingungen für Satellitensignale häufig genauer bestimmt werden, als mittels GPS oder A-GPS.

Insoweit ist die funknetzbasierte Lokalisierung grundsätzlich gegenüber der Lokalisierung mittels eines Satellitennavigationssystems, insbesondre des GPS, bevorzugt. Für die funknetzbasierte Lokalisierung ist jedoch eine bestimmte Dichte von Funkzugangspunkten erforderlich, die nicht überall gegeben ist. Insbesondere müssen in der Regel in dem zu lokalisierenden Endgerät Funksignale von einer bestimmten Mindestanzahl von Funkzugangspunkten empfangen werden bzw. Funksignale des Endgeräts müssen in einer Mindestanzahl von Funkzugangspunkten empfangen werden, um eine hinreichend genaue Lokalisierung vornehmen zu können.

Zur funknetzbasierten Lokalisierung stehen mehrere Methoden zur Verfügung, die abhängig von der Empfangssituation des Endgeräts eine Lokalisierung mit unterschiedlichen Genauigkeiten ermöglichen.

Eine erste solche funknetzbasierte Lokalisierungsmethode basiert auf einer Lateration. Hierbei wird die Position des Endgeräts als Schnittpunkt von drei Kreisen bestimmt, in deren Mittelpunkten sich jeweils ein Zugangspunkt befindet und deren Radien jeweils dem Abstand zu dem Zugangspunkt entsprechen. Die Positionen der Zugangspunkte werden hierzu vorab bestimmt und dienen als Eingangsgrößen für die Lateration. Eine Möglichkeit zur Bestimmung der Abstände zu den Zugangspunkten bieten so genannte RSS (Received Signal Strength)-Verfahren, bei denen der Abstand zwischen einem Zugangspunkt und dem Endgerät aus der empfangenen Signalstärke eines Signals Berücksichtigung einer Sendeleistung des Zugangspunkts bestimmt wird. Dabei kann eine endgeräteseitige Auswertung vorgenommen werden, bei der die im Endgerät empfangene Signalstärke eines Funksignals eines Funkzugangspunkts bestimmt wird. Gleichfalls kann eine netzseitige Auswertung vorgenommen werden, bei der die in einem Funkzugangspunkt empfangene Signalstärke eines Funksignals des Endgeräts zugrunde gelegt wird. Alternativ zur Abstandsbestimmung anhand der Signalstärke können die Abstände auch anhand einer Laufzeitmessung bestimmt werden.

Eine Lateration erfordert den Empfang von Funksignalen von wenigstens drei Funkzugangspunkten im Endgerät oder den Empfang von Funksignalen des Endgeräts in wenigstens drei Funkzugangspunkten. Die Lateration ermöglicht eine hohe Genauigkeit insbesondere dann, wenn sich die Funksignale der Funkzugangspunkte weitgehend ungestört ausbreiten können. Dämpfungen und andere Störungen durch Hindernisse können hingegen in der Regel bei der Lokalisierung nicht berücksichtigt werden und führen daher zu einer höheren Ungenauigkeit der ermittelten Position.

Als weitere funknetzbasierte Lokalisierungsmethoden können so genannte Mustererkennungsverfahren eingesetzt werden. Sie basieren auf dem Vergleich eines empfangenen Funksignalmusters, das die Signalstärken der empfangenen Funksignale verschiedener Funkzugangspunkte enthält und auch als Fingerabdruck bzw. "Fingerprint" bezeichnet wird, mit im Voraus erfassten Referenzsignalmustern. Als Position des Endgeräts kann bei den Mustererkennungsverfahren der Ort angenommen werden, an dem das Referenzmuster gemessen wurde, das die größte Übereinstimmung mit dem erfassten Fingerabdruck aufweist, oder die Position wird aus mehreren Referenzmustern mit hoher Übereinstimmung und den zugeordneten Positionen ermittelt, wodurch sich auch Positionen des Endgeräts zwischen den Erfassungsorten der Referenzmuster als Standorte ermitteln lassen.

Die Genauigkeit der Lokalisierung anhand einer Musterkennung erhöht sich mit der Anzahl der Funkzugangspunkte, deren Funksignale in dem zu lokalisierenden Endgerät empfangen und für die Positionsbestimmung herangezogen werden, da sich die Signalmuster an unterschiedlichen Position bei einer höheren Anzahl verschiedener Funksignale in höherem Maße voneinander unterscheiden. Zudem führen Störungen bei der Signalausbreitung zur einer höheren "Individualisierung" der Signalmuster an einer bestimmten Position. Insoweit eignet sich die Musterkennung insbesondere dann für die Lokalisierung von Endgeräten, wenn die Lateration zu größeren Ungenauigkeiten führt.

Darüber hinaus kann die Lokalisierung eines Endgeräts auf der Grundlage der Position eines Funkzugangspunkts ermittelt werden, dessen Funksignale in dem Endgerät empfangen werden bzw. der Funksignale des Endgeräts empfängt. Hierbei lässt sich jedoch lediglich ein Bereich ermitteln, in welchem sich das Endgerät befindet und der dem Sende- bzw. Empfangsbereich des betreffenden Funkzugangspunkts entspricht. Die Genauigkeit ist damit erheblich geringer als bei einer Lokalisierung mittels Lateration oder Mustererkennung. Wenn jedoch nur Funksignale eines einzigen Funkzugangspunkts empfangen werden bzw. Funksignale des Endgeräts nur in einem Funkzugangspunkt empfangen werden und andere Lokalisierungsverfahren, wie beispielsweise GPS, nicht verfügbar sind, kann die Position eines Endgeräts lediglich anhand einer solchen Approximation ermittelt werden.

Somit können unterschiedliche Methoden zur funknetzbasierten Lokalisierung von mobilen Endgeräten verwendet werden, deren Genauigkeit in verschiedenen Situationen unterschiedlich hoch ist. Es hängt dabei von den Gegebenheiten an einer zu lokalisierenden Position eines Endgeräts, insbesondere von der örtlichen Dichte der Funkzugangspunkte und von gegebenenfalls vorhandenen Störungen der Signalausbreitung ab, ob eine funknetzbasierte Lokalisierung durchgeführt werden kann und welche Lokalisierungsmethode zu bevorzugen ist.

Vor diesem Hintergrund ist es eine Aufgabe der vorliegenden Erfindung, eine gezielte Auswahl einer geeigneten funknetzbasierten Lokalisierungsmethode vornehmen zu können, wenn eine funknetzbasierte Lokalisierung durchgeführt werden kann.

Die Aufgabe wird gelöst durch ein Verfahren nach Anspruch 1. Ausgestaltungen des Verfahrens sind in den abhängigen Ansprüchen angegeben.

Vorteilhaft ermöglicht die Erfindung die Steuerung der Aktivierung einer funknetzbasierten Lokalisierung in Abhängigkeit von Informationen, die zusätzlich zu im Endgerät empfangenen Funksignalen ausgewertet werden können. Hierdurch können Informationen herangezogen werden, die im Endgerät nicht verfügbar sind und gegebenenfalls eine bessere Bewertung der Verfügbarkeit und erreichbaren Genauigkeit der funknetzbasierten Lokalisierung ermöglichen. Aufgrund der Steuerung kann die funknetzbasierte Lokalisierung insbesondere aktiviert werden, oder sie kann deaktiviert werden, ins besondere wenn mangelnde Verfügbarkeit einer solchen Lokalisierung festgestellt wird.

Die Funkzugangspunkte sind in einer Ausgestaltung als Wifi-Zugangspunkte ausgebildet, die insbesondere nach einem Standard der IEEE 802.11-Familie arbeiten. Die Funkzugangspunkte können beispielsweise von den Kunden eines Anbieters eines Datendienstes, auf den mittels der Funkzugangspunkte zugegriffen wird, in ihren Wohn- oder Geschäftsräumen betrieben werden. Gleichfalls kann es sich beispielsweise um Funkzugangspunkte handeln, die an öffentlichen Orten betrieben werden. In einer weiteren Ausgestaltung handelt es sich um Funkzugangspunkte eines Mobilfunknetzes, insbesondere eines 2G-, 3G- oder 4G_Netzes. Dabei kann es sich insbesondere auch um Funkzugangspunkte handeln, die so genannten Micro- oder Pico-Funkzellen erzeugen, die über eine relativ kleine räumliche Ausdehnung verfügen. Solche Funkzugangspunkte können untere anderem ähnlich wie Wifi-Zugangspunkte in Wohn- oder Geschäftsräumen oder lokal an bestimmten öffentlichen Orten betrieben werden, die ansonsten über keine hinreichende Abdeckung durch ein Mobilfunknetz verfügen. Die Erfindung ist jedoch keineswegs auf derartige Micro- oder Pico-Funkzellen beschränkt, sondern es können grundsätzlich jegliche Funkzugangspunkte von Mobilfunknetzen eingesetzt werden.

Bei den in dem Funknetz gesendeten und/oder empfangenen Funksignalen handelt es sich insbesondere um Funksignale die von einem Funkzugangspunkt des Funknetz gesendet und in dem Endgerät empfangen werden und/oder um Funksignale, die von dem Endgerät gesendet und in einem Funkzugangspunkt des Funknetzes empfangen werden.

Die Empfangseinrichtung wird vorzugsweise unabhängig von den Endgeräten betrieben. Insbesondere kann es sich um eine im Wesentlichen stationäre Empfangseinrichtung handeln, die an einem Aufstellungsort installiert ist und betrieben wird.

In einer Ausgestaltung des Verfahrens ist vorgesehen, dass die funknetzbasierte Lokalisierung mittels der Lokalisierungseinrichtung nur dann aktiviert oder fortgesetzt wird, wenn die Anzahl von Funkzugangspunkten, deren Funksignale in der Empfangseinrichtung erfasst werden und/oder die Anzahl von Funkzugangspunkten mit einem Aufstellungsort in der Umgebung des Endgeräts eine vorgegebene Mindestanzahl überschreitet. Andernfalls, wird die Lokalisierung deaktiviert. Unter eine Fortsetzung ist hier eine Beibehaltung einer Aktivierung der Lokalisierung zu verstehen. In der zuvor genannten Ausgestaltung kann die Aktivierung oder Fortsetzung der Aktivierung vorteilhaft von der Anzahl der Funkzugangspunkte abhängig gemacht werden, deren Funksignale im Bereich der zu lokalisierenden Position des Endgeräts empfangen werden können. Es kann vorgesehen sein, dass eine Aktivierung der Lokalisierung mittels der Funksignale der Funkzugangspunkte aktiviert oder fortgesetzt wird, wenn mittels der Empfangseinrichtung lediglich Funksignale eines einzigen Funkzugangspunkts empfangbar sind und/oder sich lediglich ein Funkzugangspunkt in der Umgebung des Endgeräts befindet. In diesem Fall kann das Endgerät jedoch anhand der Funksignale lediglich mit einer geringen Genauigkeit lokalisiert werden. Daher können auch Mindestanzahlen der mittels der Empfangseinrichtung empfangbaren und/oder in der Umgebung des Endgeräts positionierten von zwei oder größer vorgesehen sein, um die Lokalisierung mittels der Funksignale zu aktivieren oder fortzusetzen. In diesem Fall ist aufgrund einer höheren Anzahl von empfangbaren Funkzugangspunkten, d.h. von Funkzugangspunkten, deren Funksignale empfangen werden können, eine höhere Genauigkeit der Lokalisierung zu erwarten.

Darüber hinaus sieht eine Ausführungsform des Verfahrens vor, dass anhand der Auswertung der Funksignale eine Anzahl von Funkzugangspunkten geschätzt wird, deren Funksignale an einer zukünftigen Position des Endgeräts empfangen werden können. Somit lässt sich die Verfügbarkeit einer Lokalisierung anhand der Funksignale der Funkzugangspunkte an einer zukünftigen Position des Endgeräts er mitteln, zu der das Endgerät ausgehend von einer zuvor ermittelten Positionen gelangen kann.

Insbesondere kann auf diese Weise die zukünftige Verfügbarkeit der Lokalisierung anhand der Funksignale der Funkzugangspunkte ermittelt werden, wenn sich das Endgerät bewegt. Dabei beinhaltet eine Ausgestaltung des Verfahrens dass eine Bewegungsrichtung des Endgeräts ermittelt wird und die Umgebung in Abhängigkeit von der ermittelten Bewegungsrichtung des Endgeräts bestimmt wird. Anhand der ermittelten Bewegungsrichtung kann etwa die zuvor erwähnte zukünftige Position des Endgeräts ermittelt bzw. geschätzt werden.

Eine Weiterbildung des Verfahrens zeichnet sich dadurch aus, dass die Funksignale aufgrund einer durchzuführenden Auswertung in der Empfangseinrichtung erfasst und ausgewertet werden. Durch eine derartige bedarfsweise durchgeführte Erfassung von Funksignalen lässt sich unter anderem die Aktualität der ausgewerteten Informationen sicherstellen. Alternativ kann es jedoch auch vorgesehen sein, dass eine regelmäßige Erfassung der Funksignale vorgenommen wird, deren Ergebnisse beispielsweise in einer Datenbank hinterlegt werden.

Darüber hinaus beinhaltet eine Ausgestaltung des Verfahrens dass zur Lokalisierung des Endgeräts mittels eines Funkadapters des Endgeräts die Funkzugangspunkte ermittelt werden, deren Funksignale in dem Endgerät empfangen werden können, und dass die Ermittlung solcher Funkzugangspunkte mittels des Funkadapters deaktiviert wird, wenn die Lokalisierung mittels der Funksignale nicht aktiviert oder fortgesetzt wird, d.h. deaktiviert wird. Über dieses Scannen hinaus kann der Funkadapter auch komplett abgeschaltet werden, falls er nicht beispielsweise für die Aufrechterhaltung einer Datenverbindung zu einem Funkzugangspunkt benötigt wird. Durch die Abschaltung des Funkadapters oder zumindest der Bestimmung von empfangbaren Funkzugangspunkten, kann Energie eingespart und die Laufzeit von Batterien, die das Endgerät mit Energie versorgen, verlängert werden.

Weiterhin sieht eine Ausführungsform des Verfahrens vor, dass in der Lokalisierungseinrichtung mehrere Lokalisierungsverfahren zur Lokalisierung des Endgeräts anhand der empfangenen Funksignale ausführbar sind und dass das ausgeführte Lokalisierungsverfahren in Abhängigkeit von einer Auswertung der mittels der Empfangseinrichtung erfassten Funksignale wenigstens eines Funkzugangspunkts ausgewählt wird. Hierdurch kann anhand einer Auswertung der außerhalb des Endgeräts erfassten Funksignale das Lokalisierungsverfahren ausgewählt werden, das an einer bestimmten Position am besten zur Lokalisierung des Endgeräts geeignet ist und insbesondere die höchste Lokalisierungsgenauigkeit ermöglicht.

Die Lokalisierungsverfahren umfassen vorzugsweise eine Lateration, bei der Abstände zwischen Funkzugangspunkten und dem Endgerät erfassten Signalstärken von Funksignalen der Funkzugangspunkte ermittelt werden, und eine Lokalisierung anhand einer Mustererkennung bzw. -auswertung umfassen, bei der Vergleiche eines erfassten Signalmusters mit Referenzsignalmustern durchgeführt werden. Wie eingangs bereits erläutert, kann mittels Lateration eine hohe Lokalisierungsgenauigkeit erreicht werden, wenn sich die Funksignale der bei der Lokalisierung berücksichtigten Funkzugangspunkte weitgehend ungestört ausbreiten bzw. die Funkzugangspunkte Funksignale des Endgeräts weitgehend ungestört empfangen können, da nur in diesem Fall die Abstände zwischen dem Endgerät und den Funkzugangspunkten mit hinreichender Zuverlässigkeit ermittelt werden können. Bei einer gestörten Signalausbreitung bietet hingegen die Lokalisierung mittels Musterauswertung eine höhere Genauigkeit.

In einer Ausführungsform des Verfahrens ist vorgesehen, dass die Auswertung der mittels der Empfangseinrichtung empfangenen Funksignale eines Funkzugangspunkts einen Vergleich einer in der Empfangseinrichtung empfangenen Signalstärke mit einer aufgrund einer Sendeleistung des Funkzugangspunkts erwarteten Signalstärke umfasst. Zur Ermittlung der erwarteten Sendeleistungen werden vorzugsweise zudem die bekannten Positionen der Empfangseinrichtung und des Funkzugangspunkts herangezogen.

Die erwartete Signalstärke ist insbesondere ein Schätzwert für die Signalstärke, die sich bei im Wesentlichen ungestörter Signalausbreitung an der Position der Erfassungseinrichtung ergeben würde. Aus dem Vergleich mit der gemessenen Signalstärke lässt sich daher ermitteln, ob von einer weitgehend ungestörten Signalausbreitung auszugehen ist und eine Lokalisierung mittels Lateration mit höherer Genauigkeit durchgeführt werden kann, oder ob die Signalausbreitung gestört ist und eine Lokalisierung anhand einer Musterauswertung mit höherer Genauigkeit durchgeführt werden kann. Eine Ausgestaltung des Verfahrens und des Systems sieht daher vor, dass eine Lokalisierung mittels Lateration durchgeführt wird, wenn eine Abweichung zwischen der erfassten Signalstärke und der erwarteten Signalstärke einen vorgegebenen Schwellwert nicht überschreitet. Andernfalls wird vorzugsweise eine Lokalisierung anhand einer Mustererkennung vorgenommen.

Darüber hinaus zeichnet sich eine Ausgestaltung des Verfahrens dadurch aus, dass die Sendeleistung des Funkzugangspunkts anhand von Sendeleistungsdaten bestimmt wird, die für die Sendeleistung repräsentativ sind und von dem Funkzugangspunkt gemeldet werden. Vorteilhaft wird in dieser Ausgestaltung die für die zuvor erläuterte Auswertung benötigte Sendeleistung, die anderweitig in der Regel nicht bestimmt werden kann, von dem Funkzugangspunkt selbst gemeldet.

Zudem ist eine Weiterbildung des Verfahrens dadurch gekennzeichnet, dass es sich bei wenigstens einer Empfangseinrichtung um einen ersten Funkzugangspunkt handelt, wobei der erste Funkzugangspunkt in einem ersten Betriebsmodus betreibbar ist, in dem er als Zugangspunkt zu einem Kommunikationsnetz dient, und dass der erste Funkzugangspunkt in einem zweiten Betriebsmodus betreibbar ist, in dem Funksignale anderer Funkzugangspunkte erfassbar sind. Vorteilhaft können bei dieser Weiterbildung die Funkzugangspunkte als Empfangseinrichtungen eingesetzt werden. Die Funkzugangspunkte befinden sich in der Regel im Wesentlichen dauerhaft an dem Erfassungsort, so dass eine Auswertung auf der Basis fortwährend aktueller Informationen erfolgen kann.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt
- Fig. 1: eine schematische Darstellung eines Systems zum Lokalisieren von Endgeräten anhand von Funksignalen von Funkzugangspunkten und
- Fig. 2: eine schematische Veranschaulichung einer Anbindung der in der Figur 1 gezeigten Funkzugangspunkte an ein Anbieternetz und ein Weitverkehrsnetz sowie eine Zentraleinrichtung zur Bereitstellung von Lokalisierungsinformationen.

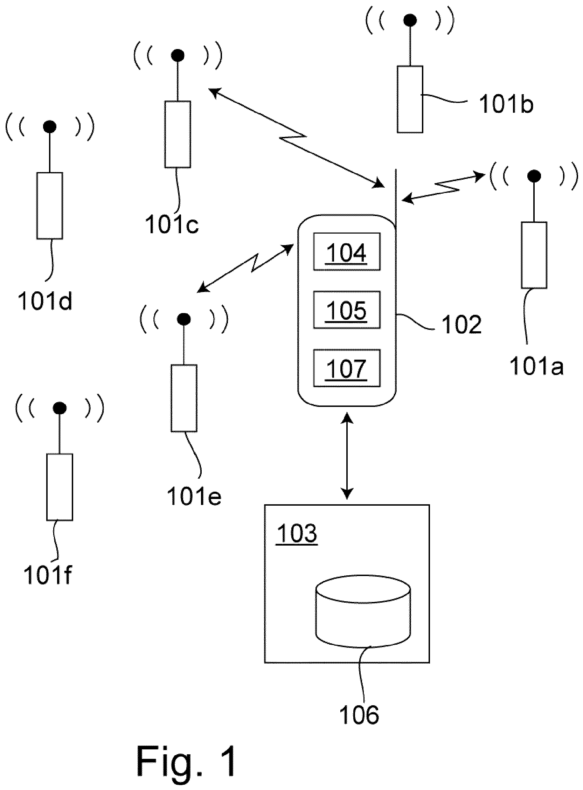

In Figur 1 ist schematisch eine Anzahl von Funkzugangspunkten 101i (in Figur 1 beispielhaft i = a,... ,f) in einem Gebiet gezeigt, in dem mobile Endgeräte 102, von denen in Figur 1 beispielhaft eines veranschaulicht ist, mithilfe von Messungen der Signale der Funkzugangspunkte 101i lokalisiert werden können.

Die Funkzugangspunkte 101i sind in einer Ausgestaltung Wifi- bzw. WLAN-fähige Zugangspunkte101i, die nach einem Standard der IEEE 802.11-Familie arbeiten. Die Funkzugangspunkte 101i können beispielsweise in Wohn- oder Geschäftsräumen von Kunden eines Anbieters eines Datendienstes betrieben werden, auf den mittels der Funkzugangspunkte 101i zugegriffen werden kann. Alternativ oder ergänzend kann das in der Figur 1 gezeigte System Funkzugangspunkte 101i umfassen, die an öffentlichen Orten betrieben werden, beispielsweise in Geschäftspassagen, Bahnhöfen, Flughäfen, Messräumen, Cafes oder dergleichen.

In einer weiteren Ausführungsform handelt es sich um Funkzugangspunkte 101i eines Mobilfunknetzes. Hierbei kann es sich um von der 3GPP spezifiziertes Mobilfunknetz, insbesondere um ein 2G-, 3G- oder 4G-Netz handeln. Die Funkzugangspunkte 101i können in dieser Ausführungsform Micro- oder Pico-Funkzellen mit einer begrenzten räumlichen Ausdehnung erzeugen. Dabei können die Funkzugangspunkte 101i gleichfalls in Innenräumen in Wohn- oder Geschäftsräumen oder öffentlichen Räumen der zuvor genannten Art installiert sein, um die Mobilfunkabdeckung dort zu verbessern.

Es ist gleichfalls möglich, dass die in Betracht gezogenen Funkzugangspunkte 101i unterschiedlichen Funknetzen zugeordnet sind. So können neben einigen Wifi-Zugangspunkten 101i weitere Funkzugangspunkte 101i vorhanden sein, die einem oder mehreren Mobilfunknetzen der zuvor genannten Art zugeordnet sind.

An einer mittels einer funknetzbasierten Methode zu lokalisierenden Position empfängt ein mobiles Endgerät 102 in einer Ausgestaltung Funksignale eines Teils der Funkzugangspunkt 101i, die zur endgeräteseitigen Lokalisierung ausgewertet werden. Neben den Funksignalen der Funkzugangspunkte 101i werden in dieser Ausgestaltung zur Lokalisierung zudem Lokalisierungsinformationen herangezogen, die von einer Zentraleinrichtung 103 bereitgestellt werden. Das zu lokalisierende Endgerät 102 ist mit der Zentraleinrichtung 103 in geeigneter Weise verbunden. Die Verbindung kann beispielsweise über einen der Funkzugangspunkte 101i hergestellt werden. Alternativ kann die Verbindung auch über ein weiteres Funknetz hergestellt werden, das unabhängig von den Funkzugangspunkten 101i betrieben wird, die zur Lokalisierung des Endgeräts 102 herangezogen werden.

Alternativ oder zusätzlich zu der endgeräteseitigen Lokalisierung kann eine netzseitige Lokalisierung des Endgeräts 102 vorgenommen werden. Hierbei werden zur Lokalisierung Funksignale herangezogen, die von dem Endgerät 102 gesendet und in einem oder mehrere Funkzugangspunkten 101i empfangen werden. Die netzseitige Lokalisierung kann in der Zentraleinrichtung 103 durchgeführt werden, welche die Position des Endgeräts 102 anhand der in den Funkzugangspunkten 101i empfangenen Funksignale des Endgeräts 102 ermittelt und die Position an das Endgerät 102 meldet. Im Falle der netzseitigen Lokalisierung dient somit die Zentraleinrichtung 103 als Lokalisierungseinrichtung zur Lokalisierung des Endgeräts 102.

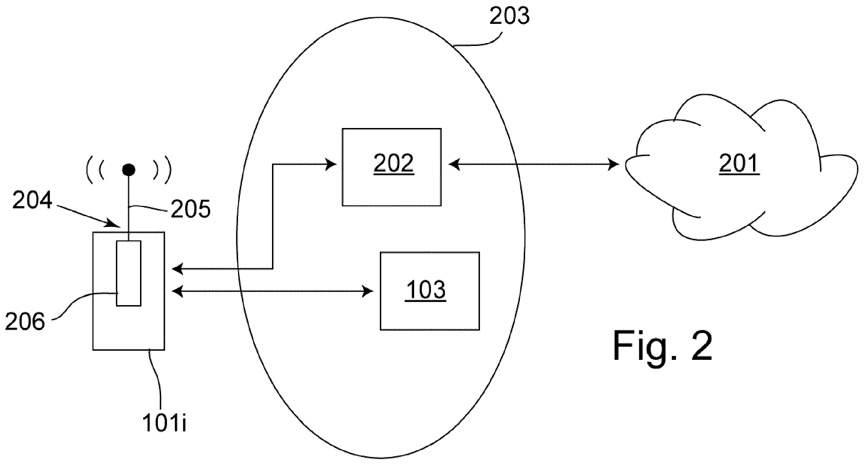

Wie die schematische Darstellung der Figur 2 für einen beispielhaften Funkzugangspunkt 101i veranschaulicht, können mit den Funkzugangspunkten 101i verbundene Endgeräte 102 über die Funkzugangspunkte 101i auf über einen Zugangsserver auf einen Kommunikations- und/oder Datendienst zugreifen. Der Zugangsserver 202 wird von einem Anbieter des Kommunikations- und/oder Datendienstes betrieben und kann sich in einem Anbieternetz 203 des Anbieters befindet. Mittels des Datendienstes kann eine Verbindung in ein Weitverkehrsnetz (WAN) 201, wie beispielsweise das Internet, hergestellt werden. Zusätzlich oder alternativ zu dem Datendienst kann ein Kommunikationsdienst für den Aufbau von Sprach- oder anderen Kommunikationsverbindungen von dem Zugangsserver 202 bereitgestellt werden, auf den über die Funkzugangspunkte 101i zugegriffen werden kann.

Wie in der Figur 2 beispielhaft für einen der Funkzugangspunkte 101i gezeigt, verfügen die Funkzugangspunkte 101i über eine Funkschnittstelle 204 mit einer Antenne 205 zum Senden und Empfangen von Funksignalen und einer Steuereinrichtung 206 zur Steuerung der Datenübertragung über die Antenne. Mit dem Anbieternetz 203 sind die Funkzugangspunkte 101i vorzugsweise über eine Festleitung verbunden. Die Datenübertragung kann beispielsweise über einen DSL (Digital Subscriber Line)-Anschluss erfolgen. In diesem Fall ist ein DSL-Modem in den Funkzugangspunkt 101i integriert, oder der Funkzugangspunkt 101i ist mit einem solchen DSL-Modem verbunden, mit dem über ein einen DSLAM (DSL Access Multiplexer) auf das Anbieternetz 203 zugegriffen wird. Gleichfalls können jedoch auch andere Übertragungstechnologien eingesetzt werden. Die Funkzugangspunkte 101i können beispielsweise von dem Anbieter des Datendienstes und Betreiber des Anbieternetzes 203 an seine Kunden ausgegeben werden oder von dem Betreiber des Anbieternetzes 203 selbst an ihren Aufstellungsorten installiert werden.

Zur funknetzbasierten Lokalisierung der Endgeräte 102 werden bei der endgeräteseitigen Lokalisierung in einer Ausgestaltung Signale der Funkzugangspunkte 101i herangezogen, die von den Funkzugangspunkten 101i in regelmäßigen Zeitabständen ausgesendet werden. Die Signale enthalten jeweils eine eindeutige Kennung des aussendenden Funkzugangspunkts. Die Kennung kann von einem Endgerät 102 auch dann aus dem Funksignal ausgelesen werden, wenn das Endgerät 102 nicht an dem Funkzugangspunkt 101i angemeldet ist, d.h. den Funkzugangspunkt 101i nicht für den Datenaustausch mit dem Weiterverkehrsnetz 201 bzw. dem Anbieternetz 203 nutzt. Insbesondere kann ein Endgerät 102 die Kennung auch dann auslesen, wenn es sich um einen geschützten Funkzugangspunkt 101i handelt, bei dem die Zugriffsmöglichkeit - beispielsweise durch die Verwendung eines Passworts und/oder spezieller Endgeräte-Filter, wie etwa MAC-Filter - auf besonders berechtigte Nutzer beschränkt ist, und das Endgerät 102 keine Berechtigung für den Zugriff besitzt.

Im Falle von Wifi-Zugangspunkten 101i ist das regelmäßig gesendete Funksignal das so genannte Beacon-Signal. Die eindeutige Kennung ist in diesem Fall die BSSID (Basic Service Set Identification) des Wifi-Zugangspunkts 101i, die einer eindeutigen MAC (Media Access Control)-Adresse des Zugangspunkts 101i entspricht. Funkzugangspunkte 101i, die einem Mobilfunknetz zugeordnet sind, senden ein Funksignal mit einer eindeutigen Kennung auf einem Broadcast-Kanal, der jeweils von allen Endgeräten 101 in einer Funkzelle, die von einem Funkzugangspunkt 101i versorgt wird, empfangen werden kann. Die in dem System lokalisierbaren Endgeräte 102 können beispielsweise als Mobiltelefone, Smartphones, Tablet-PCs, Notebookcomputer oder dergleichen ausgestaltet sein. Für die Kommunikation mit den Funkzugangspunkten 101i verfügen die Endgeräte 102 über einen oder mehrere Funkadapter 104, mit denen Funksignale der Funkzugangspunkte 101i empfangen und vorzugsweise auch Funksignale an die Funkzugangspunkte 101i übertragen werden können. Zur Auswertung der Beacon-Signale bzw. der entsprechenden Mobilfunksignale verfügt der Funkadapter 104 über eine Einrichtung zum Auslesen der enthaltenen Kennung. Ferner ist der Funkadapter 104 in einer Ausführungsform dazu ausgestaltet, die Signalstärke der von den Funkzugangspunkten 101i empfangenen Funksignale, insbesondere der empfangenen Beacon-Signale, zu bestimmen. Alternativ können bei einer Ausgestaltung anstelle der Signalstärke auch die Laufzeiten des Signals von den Funkzugangspunkten 101i zu dem Endgerät 102 ermittelt werden.

Neben dem Funkadapter 104 zur Herstellung von Verbindungen zu den Funkzugangspunkten 101i können die Endgeräte 102 ggf. weitere Kommunikationsschnittstellen für den mobilen Datenaustausch enthalten. Sofern zur Lokalisierung lediglich Wifi-Zugangspunkte herangezogen werden, kann es beispielsweise dennoch vorgesehen sein, dass die Endgeräte 102 über Funkmodule für die Verbindung mit einem Mobilfunknetz verfügen Auf diese Weise können sich die Endgeräte 102 auch ohne Nutzung einer Datenverbindung über einen der Funkzugangspunkte 101i mit Einrichtungen in dem Weitverkehrsnetz 201 oder dem Anbieternetz 203 verbinden - beispielsweise dann, wenn sie keine Berechtigung für die Nutzung der verfügbaren Funkzugangspunkte 101i besitzen.

Das in der Figur 1 gezeigte System umfasst weiterhin eine Zentraleinrichtung 103, welche für die endgerätseitige Lokalisierungsinformationen bereitstellt, die zur Lokalisierung der Endgeräte 102 anhand der Funksignale der Funkzugangspunkte 101i herangezogen werden. Die Zentraleinrichtung 103 wird in der dargestellten Ausgestaltung von dem Anbieter des Daten- und/oder Kommunikationsdienstes in dem Anbieternetz 203 betrieben, der somit auch einen Lokalisierungsdienst anbieten kann. Gleichfalls kann jedoch vorgesehen sein, dass der Daten- und/oder Kommunikationsdienst und der Lokalisierungsdienst von verschiedenen Anbietern angeboten werden. Die Lokalisierungsinformationen sind in einer Datenbank 106 der Zentraleinrichtung 103 enthalten, auf die zur Lokalisierung eines Endgeräts 102 zugriffen wird. Bei der Lokalisierung des Endgeräts 102 werden Daten zwischen dem Endgerät 102 und der Zentraleinrichtung 103 ausgetauscht.. Wie zuvor erwähnt, kann das Endgerät 102 hierzu beispielsweise über einen der Funkzugangspunkte 101i mit der Zentraleinrichtung 103 kommunizieren oder, wie ebenfalls zuvor bereits beschrieben, über einen anderen Kommunikationsweg.

Die funknetzbasierte Lokalisierung eines Endgeräts 102 wird bei der endgeräteseitigen Lokalisierung von einer Lokalisierungseinrichtung 105 durchgeführt, die bei der in der Figur 1 gezeigten Ausführungsform in dem Endgerät 102 angeordnet ist und beispielsweise als eine in einem Prozessor des Endgeräts 102 ausgeführte Software ausgestaltet sein kann. In dieser Ausgestaltung werden die empfangenen Kennungen von Funkzugangspunkten 101i sowie die gemessen Signalstärken innerhalb des Endgeräts 102 übergeben. Weitere Lokalisierungsinformationen werden von der Zentraleinrichtung 103 an die Lokalisierungseinrichtung 105 in dem Endgerät 102 übermittelt. Dies geschieht beispielsweise infolge einer entsprechenden Anfrage des Endgeräts 102. Die Auswahl der an die Lokalisierungseinrichtung 105 zu übermittelnden Daten in der Zentraleinrichtung erfolgt beispielsweise auf der Grundlage der in dem Endgerät 102 empfangenen Kennungen, die zur Durchführung der Auswahl von dem Endgerät 102 an die Zentraleinrichtung 103 übermittelt werden können. In einer alternativen Ausgestaltung kann die Lokalisierungseinrichtung 105 auch in der Zentraleinrichtung 103 angeordnet sein. Hierdurch kann die Lokalisierung auch bei begrenzten Rechenkapazitäten des Endgeräts 102 durchgeführt werden. In dieser Ausgestaltung sendet das Endgerät 102 die empfangenen Kennungen der Funkzugangspunkte 101i und die gemessenen Signalstärken zusammen mit einer Lokalisierungsanfrage an die Zentraleinrichtung 103. Dort berechnet die Lokalisierungseinrichtung 105 in der zuvor beschriebenen Weise die Position des Endgeräts 102 und meldet diese an das Endgerät 102 zurück.

Die Lokalisierung des Endgeräts 102 erfolgt in einer Ausgestaltung durch ein Mustererkennungsverfahren. Hierbei werden in dem zu lokalisierenden Endgerät 102 die auch als RSS-Werte bezeichneten Signalstärken der von den Funkzugangspunkten 101i gesendeten Funksignale, insbesondere der Beacon-Signale, bestimmt sowie die zugehörigen Kennungen der Funkzugangspunkte 101i aus den Signalen ausgelesen. Die Zusammenstellung der RSS-Werte wird hier auch als Signalmuster bezeichnet. Zur Lokalisierung des Endgeräts 102 vergleicht eine Lokalisierungseinrichtung 105 das empfangene Signalmuster mit Referenzsignalmustern, die von der Zentraleinrichtung 103 bereitgestellt werden. Den Referenzsignalmustern ist jeweils eine Position zugeordnet, an der das Referenzsignalmuster erfasst worden ist. Aus dem Vergleich zwischen dem erfassten Signalmuster und den Referenzsignalmustern ermittelt die Lokalisierungseinrichtung 105 dann näherungsweise die Position des Endgeräts 102. Hierzu können verschiedene dem Fachmann an sich bekannte Verfahren eingesetzt werden. Beispiele für derartige Verfahren sind Nearest Neighbours in Signal Space (NNSS)-Verfahren, bei denen die Position anhand der euklidischen Distanz zwischen einem die erfassten RSS-Werte enthaltenden RSS-Vektor und die Signalstärken der Referenzsignalmuster enthaltenden RSS-Vektoren ermittelt wird. Insbesondere kann hierbei als Schätzung für die Position des Endgeräts 102 die Position bestimmt werden, die dem Referenz-RSS-Vektor mit der kleinsten euklidischen Distanz zu dem erfassten RSS-Vektor zugeordnet ist. Weitere Beispiele sind so genannte k-NNSS-Verfahren, bei denen anstelle eines einzigen Referenzmusters mit einem RSS-Vektor mit der kleinsten euklidischen Distanz zu dem erfassten Referenzwert, mehrere Referenzmuster für benachbarte Positionen - insbesondere k benachbarte Position - in die Positionsbestimmung einbezogen werden, sowie so genannte Smallest Polygon-Verfahren.

Die Referenzsignalmuster und die Kennungen der Funkzugangspunkte, von denen Funksignale empfangen werden, deren Signalstärken in den Mustern enthalten sind, werden mithilfe einer oder mehreren Empfangseinrichtungen an bekannten Positionen erfasst und können zusammen mit den Positionen in einer Datenbank 107 der Zentraleinrichtung 103 gespeichert werden. Als Empfangseinrichtungen werden in einer Ausführungsform Messfahrzeuge eingesetzt, mit denen Messfahrten durchgeführt werden. Während der Messfahrten zeichnen die Messfahrzeuge Signalstärken von empfangenen Funksignalen, die zugehörigen Kennungen der die Funksignale sendenden Funkzugangspunkte 101i sowie die zugehörige Positionen auf. Die Positionen können beispielsweise in den Messfahrzeugen mittels des GPS bestimmt werden kann. Die Durchführung derartiger Messfahrten ist auch unter der Bezeichnung Wardriving bekannt ist und wird in einem Gebiet vorzugsweise so häufig wie möglich wiederholt, um eine möglichst aktuelle Datenbasis für die Lokalisierung bereitstellen zu können.

In einer weiteren Ausgestaltung werden zur Erfassung der Referenzsignalmuster zumindest einige der Funkzugangspunkte 101i eingesetzt, die zu diesem Zweck mit der Zentraleinrichtung 103 kommunizieren können. Eine derartige Erfassung von Referenzsignalmustern wird nachfolgend erläutert und ist auch Gegenstand der parallel eingereichten Patentanmeldung der vorliegenden Anmelderin mit dem internen Aktenzeichen 12214-PT-WO, auf die insoweit verwiesen wird.

Zur Erfassung der Signalmusterdaten werden von einem Funkzugangspunkt 101i die Beacon-Signale der umgebenden Funkzugangspunkte 101i empfangen und ausgewertet. Hierzu scannt der Funkzugangspunkt 101i sämtliche verwendbaren Funkkanäle in ähnlicher Weise wie Kommunikationsendgeräte 102 bei der Suche nach verfügbaren Funkzugangspunkten 101i. Für den Empfang der Beacon-Signale wird der Funkzugangspunkt 101i in einem Client-Modus betrieben. In diesem Modus wird die funkschnittstelle 204 der Funkzugangspunkte 101i für den Empfang von Funksignalen anderer Funkzugangspunkte 101i verwendet. Dies kann insbesondere durch eine entsprechend angepasste Firmware des Funkzugangspunkts 101i realisiert werden. Ein Beispiel für eine geeignete Firmware, die in den Funkzugangspunkten 101i des System eingesetzt werden kann, um die Erfassung von Funksignalsignalmustern zu ermöglichen, ist die an sich bekannte Freifunk-Firmware für Funkzugangspunkte 101i, die in so genannten Freifunknetzen eingesetzt werden. Im Client-Modus verfügt ein Funkzugangspunkt 101i über Funktionalitäten, die auch die Funkadapter 104 von Endgeräten 102 bereitstellen, bietet jedoch üblicherweise Endgeräten 102 nicht die Möglichkeit für einen Zugriff auf den Funkzugangspunkt 101i zum Aufbau von Datenverbindungen in das Anbieternetz 203 bzw. das Weiterverkehrsnetz 201. Daher ist vorgesehen, dass die Funkzugangspunkte 101i lediglich kurzzeitig zur Erfassung der Signalmusterdaten im Client-Modus betrieben werden. Im Übrigen werden die Funkzugangspunkte 101i in einem "normalen" Betriebsmodus, in dem Endgeräte 102 über den Funkzugangspunkt 101i Datenverbindungen insbesondere in das Weiterverkehrsnetz 201 aufbauen können.

In einer Ausgestaltung ist vorgesehen, dass die Funkzugangspunkte 101i die Funksignalmuster in vorgegebenen, insbesondere regelmäßigen Zeitabständen erfassen und an die Zentraleinrichtung 103 übermitteln. In der Zentraleinrichtung 103 werden die jeweils letzten von den Funkzugangspunkten 101i übermittelten Funksignalmuster als Referenzsignalmuster in der Datenbank 106 hinterlegt. Auf diese Weise kann mithilfe der Funkzugangspunkte 101i eine Datenbasis mit Referenzsignalmustern umfassenden Lokalisierungsinformationen in der Datenbank 106 erstellt werden. Auf einzelne in der Datenbank 106 gespeichert Referenzsignalmuster wird dann zugegriffen werden, wenn eine Lokalisierung eines Endgeräts 102 durchzuführen ist. Dabei können für eine Lokalisierung beispielsweise die Referenzsignalmuster herangezogen werden, die eine oder mehrere Kennungen eines Funkzugangspunkts 101i enthalten, welche auch von dem Endgerät 102 an der zu lokalisierenden Position erfasst worden sind, und/oder es können die in der Datenbank 106 hinterlegten Referenzsignalmuster herangezogen werden, die von einem Funkzugangspunkt 101i gemeldet worden sind, dessen Kennung von dem Endgerät 102 an der zu lokalisierenden Position erfasst wird. Die Kennung wird vorzugsweise von dem Funkzugangsunkt 101i angegeben, wenn die Signalmusterdaten an die Zentraleinrichtung 103 übermittelt werden, und kann in der Datenbank 106 zusammen mit den Signalmusterdaten hinterlegt werden.

In einer weiteren Ausgestaltungen ist zusätzlich oder alternativ zu fortlaufenden Aktualisierungen der von einem Funkzugangspunkt 101i erfassten Signalmusterdaten in der Datenbank 106 vorgesehen, dass die Funkzugangspunkte 101i die Signalmusterdaten bedarfsweise an die Zentraleinrichtung 103 melden, wenn ein Endgerät 102 zu lokalisieren ist. Hierzu kann die Zentraleinrichtung 103 die Signalmusterdaten im Bedarfsfall von einem Funkzugangspunkt 101i anfordern, der die Daten dann in einer Antwort auf die Anforderung an die Zentraleinrichtung 103 sendet, welche die Signalmusterdaten in der zuvor bereits beschriebenen Weise für die Lokalisierungseinrichtung 105 bereitstellt, welche die Lokalisierung durchführt. Die Anforderung zur Übertragung der Signalmusterdaten wird von der Zentraleinrichtung 103 vorzugsweise an die Funkzugangspunkt 101i, deren Signalmusterdaten potenziell relevant für die vorzunehmende Lokalisierung sind. Hierbei kann es sich beispielsweise um die Funkzugangspunkte handeln, deren Kennungen von dem zu lokalisierenden Endgerät 102 empfangen werden und/oder um Funkzugangspunkte, welche Funksignale von weiteren Funkzugangspunkten 101i empfangen, deren Kennung von dem zu lokalisierenden Endgerät 102 empfangen werden. Diese Kennungen können von den Funkzugangspunkten 101i beispielsweise regelmäßig durch Scans ermittelt und an die Zentraleinrichtung 103 gemeldet werden. Gleichfalls kann die Zentraleinrichtung 103 die für die Lokalisierung potenziell relevanten Referenzsignalmuster in anderer Weise ermitteln, beispielsweise anhand einer geschätzten Position des Endgeräts 102 und der Positionen der Funkzugangspunkte 101i.

Die für Lokalisierung von Endgeräten 102 ebenfalls benötigten Positionen, an denen die Referenzsignalmuster erfasst werden, entsprechen in der zuvor beschriebenen Ausgestaltung den Positionen der Funkzugangspunkte 101i, welche die Referenzsignalmuster jeweils melden. In dem in der Figur 1 gezeigten System werden die Positionen der Zugangspunkte 101i zusammen mit der Kennung und ggf. zusammen mit den von den Zugangspunkten gemeldeten Referenzsignalmusterdaten oder Sendeleistungsangaben (falls diese dauerhaft gespeichert und nicht für jede Lokalisierung abgerufen werden) in der Datenbank 106 der Zentraleinrichtung 103 gespeichert. Wenn ein Endgerät 102 zu lokalisieren ist, dann werden die Positionen der bei der Lokalisierung berücksichtigten Funkzugangspunkte 101i aus der Datenbank 106 ausgelesen und an die Lokalisierungseinrichtung 105 übermittelt, welche die Lokalisierung durchführt.

Die Erfassung der Positionen der Funkzugangspunkte 101i kann auf verschiedene Weise erfolgen. In einer Ausgestaltung werden die Positionen beispielsweise von den Nutzern bzw. Betreibern der Funkzugangspunkte 101i angegeben. Insbesondere können die Positionen aus Adressen der Aufstellungsorte ermittelt werden, die von den Nutzern angegeben werden. Diese können beispielsweise den Adressen der Wohn- oder Geschäftsräume der Nutzer entsprechen, welche diese bei dem Anbieter des Datendienstes angeben, bevor die von ihnen betriebenen Funkzugangspunkte 101i zur Lokalisierung von Endgeräten 101i verwendet werden. Die Angabe kann im Zusammenhang mit dem Lokalisierungsdienst des Anbieters gemacht werden. Es kann jedoch auch vorgesehen sein, dass die Angabe bei der Aufnahme von Kunden im Zusammenhang mit der Anmeldung zu dem Datendienst gemacht wird. Alternativ können die Positionen auch von dem Anbieter des Lokalisierungsdienstes bei der Aufstellung der Funkzugangspunkte 101i aufgenommen werden, wenn die Funkzugangspunkte 101i von dem Anbieter aufgestellt werden. Dies kann beispielsweise bei öffentlich zugänglichen Funkzugangspunkten 101i der Fall sein, die von dem Anbieter betrieben werden, und bei Funkzugangspunkten 101i von Privatleuten und Firmen, die einen Service des Anbieters für die Aufstellung der Funkzugangspunkte 101i in Anspruch nehmen. Darüber hinaus können jedoch auch anderen Varianten für die Erfassung der Positionen der Funkzugangspunkte 101i implementiert werden, wenn diese sich als zweckmäßiger erweisen sollten. Zur Bestimmung der Positionen der Funkzugangspunkte 101i aus den Adressen der Aufstellungsorte wird vorzugsweise eine dem Fachmann an sich bekannte Geocodierung durchgeführt, bei in einem geeigneten Koordinatensystem die Koordinaten der Adressen ermittelt werden.

Die Positionen der Funkzugangspunkte 101i werden der Lokalisierungseinrichtung 105, welche die Lokalisierung eines Endgeräts 102 durchführt, jeweils zusammen mit den Referenzsignalmustern übermittelt, die in der Lokalisierungseinrichtung 105 zur Lokalisierung herangezogen werden.

In weiteren Ausgestaltung ist es grundsätzlich auch möglich, anstelle von Messfahrzeugen oder den Funkzugangspunkten 101i spezielle stationäre Messeinrichtungen einzusetzen, die an bekannte Positionen installiert und mit der Zentraleinrichtung 103 verbunden sind.

Alternativ zu der Lokalisierung mittels Mustererkennung kann die Lokalisierungseinrichtung 105 eine dem Fachmann grundsätzlich bekannte Lateration durchführen, um die Position des Endgeräts 102 zu schätzen. Voraussetzung für die Lateration ist der Empfang von Funksignalen von wenigstens drei verschiedenen Funkzugangspunkten 101i in dem zu lokalisierenden Endgerät 102. Die Position des Endgeräts 102 wird bei der Lateration näherungsweise als Schnittpunkt dreier Kreise bestimmt, in deren Mittelpunkten sich jeweils ein Funkzugangspunkt 101i befindet, dessen Funksignale in dem Endgerät 102 empfangen werden. Die Radien der Kreise entsprechen jeweils dem Abstand zwischen dem Endgerät 102 und dem betreffenden Funkzugangspunkt 101i.

Um anhand der Lateration die Position des Endgeräts 102 zu schätzen, ermittelt das Endgerät 102 die Kennungen von wenigstens drei Funkzugangspunkten 101i, deren Funksignale in dem Endgerät 102 empfangen werden. Die Zentraleinrichtung 103 stellt dann die Positionen der Funkzugangspunkte 101i für die Lokalisierungseinrichtung 105 bereit, die beispielsweise in der Datenbank 105 zusammen mit den zugehörigen Kennungen gespeichert sein können. Wenn Funksignale von mehr als drei Funkzugangspunkten 101i in dem Endgerät 102 erfasst worden sind, dann kann vorgesehen sein, dass aus diesen Funkzugangspunkten 101i zufällig oder nach einem vorgegebenen Kriterium drei Funkzugangspunkte 101i für die Lateration ausgewählt werden und die übrigen Funkzugangspunkte 101i nicht weiter berücksichtigt werden. Ein einsetzbares Kriterium kann beispielsweise vorsehen, dass nur die drei Funkzugangspunkte 101i mit den größten Signalstärken berücksichtigt werden. Die Auswahl der bei der Lateration berücksichtigten Funkzugangspunkte 101i kann bereits bei der Erfassung der Funksignale in dem Endgerät 102 vorgenommen werden, oder in der Zentraleinrichtung 103 bzw. in der Lokalisierungseinrichtung 105.

Die bei der Lateration als Kreisradien herangezogenen Abstände zwischen dem Endgerät 102 und den zu berücksichtigten Funkzugangspunkten 101i werden in der Lokalisierungseinrichtung 105 in einer Ausgestaltung jeweils anhand der Signalstärke des von den Funkzugangspunkten 101i empfangenen Funksignals, insbesondere des Beacon-Signals, ermittelt sowie in Abhängigkeit von der Sendeleistung der Funkzugangspunkte 101i, die ebenfalls von der Zentraleinrichtung 103 bereitgestellt wird, wie weiter unten noch genauer erläutert wird. Zur Bestimmung des Abstands aus Sendeleistung und der empfangenen Signalstärke kann die Lokalisierungseinrichtung 105 einen vorgegebenen geschätzten Zusammenhang für die Abnahme der Signalstärke in Abhängigkeit von der Entfernung zum Funkzugangspunkt 101i verwenden. Näherungsweise kann der Abstand beispielsweise unter der Annahme bestimmt werden, dass sich die Funksignale im freien Raum ausbreiteten. Sofern nur geringe Störungen bei der Signalausbreitung vorliegen, die sich beispielsweise aufgrund von Hindernissen auf dem Signalweg ergeben, kann auf diese Weise eine Lateration durchgeführt werden, bei der die Genauigkeit der ermittelten Position des Endgeräts 102 im Bereich von ca. 10 m oder höher liegt.

Als Sendeleistungen können in einer Ausgestaltung vorgegebene Standardwerte verwendet werden, die beispielsweise üblichen werkseitigen Einstellungen von Funkzugangspunkten entsprechen. Hierdurch kann jedoch nicht berücksichtigt werden, dass die werkseitige Einstellung der Sendeleistung üblicherweise verändert werden kann. Um auch derartige Veränderungen berücksichtigen zu können, ist in einer Ausführungsform vorgesehen, dass zumindest einige der Funkzugangspunkte 101i, deren Funksignale in dem hierin beschriebenen System zur Lokalisierung von Endgeräten 102 verwendet werden, die jeweils eingestellte Sendeleistung an die Zentraleinrichtung 103 senden. Dies wird im Folgenden erläutert und ist ebenfalls Gegenstand der zuvor bereits erwähnten Anmeldung der vorliegenden Anmelderin mit dem internen Aktenzeichen 12214-PT-DE, auf die insoweit verwiesen wird.

Zur Angabe der Sendeleistung des Funkzugangspunkts 101i sendet dieser Sendeleistungsdaten in einer Nachricht zusammen mit der Kennung des Funkzugangspunkts 101i an die Zentraleinrichtung 103. Die Sendeleistungsdaten können die Sendeleistung direkt angeben oder Angaben enthalten, aus denen die Zentraleinrichtung 103 die Sendeleistung ermitteln kann. So kann beispielsweise vorgesehen sein, dass die Sendeleistung an dem Funkzugangspunkt 101i als Bruchteil einer gerätespezifischen maximalen Sendeleistung eingestellt werden kann. In einem solchen Fall können die Sendeleistungsdaten beispielsweise den eingestellten Bruchteil angeben. Zusätzlich kann der Funkzugangspunkt 101i die maximale Sendeleistung angeben oder einen Gerätenamen, anhand dessen die Zentraleinrichtung 103 die maximale Sendeleistung des Geräts aus einer Tabelle ermittelt. Aus den erhalten Angaben kann die Zentraleinrichtung dann die aktuelle Sendeleistung des Funkzugangspunkts 101i ermitteln.

In einer Ausführungsform meldet der Funkzugangspunkt 101i die Sendeleistung anhand der Sendeleistungsdaten unabhängig von einer durchzuführenden Lokalisierung bzw. Positionsbestimmung für ein Endgerät 102 an das zentrale System, und die Sendeleistung wird zusammen mit der ebenfalls gemeldeten Kennung des Funkzugangspunkts 101i in der Datenbank 106 der Zentraleinrichtung 103 hinterlegt. Wenn die Lokalisierung eines Endgeräts 102 anhand einer Lateration unter Heranziehung der Funksignale des Funkzugangspunkt 101i vorgenommen werden soll, dann wird die Sendeleistung aus der Datenbank 106 ausgelesen und in der zuvor beschriebenen Weise der Lokalisierungseinrichtung 105 zur Lokalisierung bereitgestellt.

Um bei den Positionsbestimmungen die jeweils aktuelle Sendeleistung des Funkzugangspunkts 101i verwenden zu können, kann vorgesehen sein, dass der Funkzugangspunkt 101i die Sendeleistung anhand entsprechender Sendeleistungsdaten in vorgegebenen - vorzugsweise regelmäßigen - Zeitintervallen an die Zentraleinrichtung 103 meldet und die Zentraleinrichtung 103 den die Sendeleistung enthaltenden Datenbankeintrag anpasst, wenn sie eine Änderung der Sendeleistung gegenüber dem zuvor gespeicherten Wert feststellt. Die regelmäßigen Meldungen können entweder von dem Funkzugangspunkt 101i initiiert werden oder aufgrund von Anforderung erfolgen, die von der Zentraleinrichtung 103 an den Funkzugangspunkt 101i. Wenn der Funkzugangspunkt 101i dies unterstützt, kann auch vorgesehen sein, dass lediglich Meldungen über Änderungen der Sendeleistung an die Zentraleinrichtung 101i gesendet und von der Zentraleinrichtung 103 zur Aktualisierung des betreffenden Datenbankeintrags herangezogen werden. Ein Vorteil dieser Ausgestaltung besteht darin, dass in der Zentraleinrichtung 103 stets die aktuelle Sendeleistung des Funkzugangspunkts 101i vorliegt und die erforderlichen Meldungen des Funkzugangspunkts 101i reduziert werden können.

In einer weiteren Ausgestaltung werden die Sendeleistungsdaten dann übertragen, wenn ein Endgerät 102 zu lokalisieren ist. Hierzu fordert die Zentraleinrichtung 103 vorzugsweise die Sendeleistungsdaten von dem Funkzugangspunkt 101i an, wenn sie eine Lokalisierungsanfrage eines Endgeräts 102 oder die Anfrage eines Endgeräts 101i zur Bereitstellung von Lokalisierungsinformationen für eine Lateration erhält. Aus den Sendeleistungsdaten, die der Funkzugangspunkt 101i als Antwort auf die Anforderung übermittelt, bestimmt die Zentraleinrichtung 103 die Sendeleistung des Funkzugangspunkts 101i und gibt diese an die Lokalisierungseinrichtung 105 weiter, welche die Lokalisierung durchführt.

Mit den Sendeleistungsdaten kann vorzugsweise auch der Betriebszustand des betreffenden Funkzugangspunkts 101i, d.h. ob der Funkzugangspunkt 101i ein- oder ausgeschaltet ist, an die Zentraleinrichtung 103 gemeldet. Dabei kann sich der Betriebszustand implizit aus den Sendeleistungsdaten ergeben. Um die Zentraleinrichtung 103 über ein Ausschalten des Funkzugangspunkts 101i zu informieren, ist vorzugsweise vorgesehen, dass während des Ausschaltvorgangs eine Meldung an die Zentraleinrichtung gesendet wird. Ergänzend oder alternativ kann die Zentraleinrichtung einen Funkzugangspunkt 101i beim Ausbleiben von vorgesehenen regelmäßigen Meldungen als ausgeschaltet markieren.

Als Alternative zur Abstandsbestimmung anhand der Sendeleistungsdaten kann auch vorgesehen sein, dass in dem Endgerät 102 oder in den Funkzugangsunkten 101i eine Laufzeit des Funksignals vom Funkzugangspunkt 101i zum Endgerät 101i ermittelt wird. Dies kann in einer dem Fachmann an sich bekannten Weise vorgenommen werden. Aus der Laufzeit kann dann ebenfalls der Abstand zwischen dem Endgerät 102 und einem Funkzugangspunkt 101i bestimmt werden. Sofern die Laufzeit bzw. der Abstand innerhalb des Funkzugangspunkts 101i bestimmt wird, kann die Laufzeit bzw. der Abstand von dem Funkzugangspunkt 101i direkt oder über die Zentraleinrichtung 103 an das Endgerät 102 gemeldet werden.

Die bei der Lateration ebenfalls benötigten Positionen der Funkzugangspunkte 101i sind vorzugsweise zusammen mit der ihnen zugeordneten Kennung in der Datenbank 106 der Zentraleinrichtung 103 hinterlegt. Dabei können die Positionen in der zuvor bereits beschriebenen Wese erfasst und dann an die Zentraleinrichtung 103 gemeldet werden. Der Lokalisierungseinrichtung 105 werden die Positionen jeweils zusammen mit den Angaben zur Sendeleistung der jeweiligen Funkzugangspunkte 101i bereitgestellt.

Die Lateration kann als eine Alternative zu der zuvor beschriebenen endgeräteseitigen Ausführung auch netzseitig ausgeführt werden. Hierbei wird netzseitig jeweils der Abstand zwischen wenigstens drei Funkzugangspunkten 101i, welche Funksignale des Endgeräts 102 empfangen und dem Endgerät 102 ermittelt und in der Zentraleinrichtung 103 ausgewertet. Die Abstandsbestimmung kann in dieser Ausgestaltung beispielsweise durch Laufzeitmessungen von Funksignalen erfolgen, die zwischen dem Endgerät 102 und den Funkzugangspunkten 101i ausgetauscht werden. In einer weiteren Ausführungsform kann auch eine Abstandsbestimmung zwischen einem Funkzugangspunkt 101i und dem Endgerät 102 anhand einer in dem Funkzugangspunkt empfangenen Signalstärke eines Funksignals des Endgeräts 102 vorgenommen werden. Die Abstandsbestimmung erfolgt in diesem Fall analog zu der zuvor beschriebenen Abstandsbestimmung anhand der in dem Endgerät 102 empfangenen Signalstärke eines Signals eines Funkzugangspunkts 101i. Dabei kann die Sendeleistung des Endgeräts 102 berücksichtigt werden, die von dem Endgerät 102 an den betreffenden Funkzugangspunkt 101i oder die Zentraleinrichtung gemeldet werden kann. Aus den Abständen und den in der Datenbank 106 hinterlegten Positionen der betreffenden Funkzugangspunkte 101i ermittelt die Zentraleinrichtung 103 sodann die Position des Endgeräts 102 und meldet die ermittelte Position an das Endgerät 102.

Eine weitere funknetzbasierte Lokalisierungsmethode wird hierin als Funknetzapproximation bezeichnet. Die endgerätseitige Funknetzapproximation wird auf der Grundlage einer empfangenen Kennung eines Funkzugangspunkts 101i vorgenommen. Beim Empfang der Kennung eines Funkzugangspunkts 101i lokalisiert die Lokalisierungseinrichtung 105 das Endgerät 102 an der Position des Funkzugangspunkts 101i, dem die Kennung zugeordnet ist. Hierzu wird die Kennung eines Funkzugangspunkts 101i aus den in dem zu lokalisierenden Endgerät 102 empfangenen Funksignalen des Funkzugangspunkts ausgelesen und an die Lokalisierungseinrichtung 105 übergeben. Diese fragt dann von der Zentraleinrichtung 103 unter Verwendung der Kennung die Positionen des Funkzugangspunkts 101i ab und bestimmt anhand dieser Positionen in der zuvor beschriebenen Weise den Aufenthaltsbereich des zu lokalisierenden Endgeräts. Zur Ermittlung der Position des Funkzugangspunkts greift die Zentraleinrichtung 103 auf die Zuordnungen zwischen den Kennungen und Positionen von Funkzugangspunkten 101i zu, die in der Zentraleinrichtung 103 hinterlegt sind.

Gleichfalls kann eine netzseitige Funknetzapproximation durchgeführt werden. Hierbei wird dem Endgerät 102 von der Zentraleinrichtung die Position eines Funkzugangspunkts 101i zugeordnet, der Funksignale des Endgeräts 102 empfängt. Die so ermittelt Position des Endgeräts 102 wird wiederum von der Zentraleinrichtung 102 an das Endgerät 102 übermittelt.

Die Funknetzapproximation führt zu größeren Ungenauigkeiten bei der Positionsbestimmung als die Lokalisierung durch Lateration und die Lokalisierung durch Mustererkennung, da die Kennung eines Funkzugangspunkts 101 relativ großen Empfangsbereich empfangen werden kann. Daher sind die beiden letztgenannten Lokalisierungsmethoden gegenüber der Funknetzapproximation grundsätzlich bevorzugt. Ein Vorteil der Funknetzapproximation besteht jedoch darin, dass lediglich Funksignale von einem einzigen Funkzugangspunkt 101i empfangen werden müssen bzw. lediglich ein Funkzugangspunkt 101i Funksignale des Endgeräts 102 empfangen muss. Die Funknetzapproximation kann daher auch bei einer geringeren Dichte von Funkzugangspunkten 101i im Gebiet eines zu lokalisierenden Endgeräts 102 eingesetzt werden.

Neben der Lokalisierungseinrichtung 105 zur endgerätseitigen funknetzbasierten Lokalisierung können Endgeräte 102, die in dem hier beschriebenen System betrieben werden, optional weitere Einheiten aufweisen, mittels derer die Endgeräte 102 auf andere Weise lokalisieren können. Insbesondere kann ein Endgerät 102 ein Satellitenortungsmodul 107 umfassen, mit dem das Endgerät 102 mittels des GPS oder eines anderen satellitengestützten Navigationssystem zu lokalisieren. Das Satellitenortungsmodul 107 umfasst einen Empfänger zum Empfang der Signale von Navigationssatelliten. Zudem ist eine Auswerteinrichtung enthalten, welche die Position des Endgeräts 102 aus den Satellitensignalen bestimmen kann. Bei der Lokalisierung mittels GPS kann optional eine Unterstützung durch zusätzliche Informationen, wie beispielsweise Informationen über eine Zelle in einem Mobilfunknetz, in dem sich das zu lokalisierende Endgerät 102 befindet, in einer dem Fachmann an sich bekannten Weise herangezogen werden, um die Genauigkeit und Verfügbarkeit zu verbessern. Dies wird üblicherweise als A-GPS (Assisted GPS) bezeichnet. Die Genauigkeit der Positionsbestimmung bei der Lokalisierung mittels GPS ist in der Regel geringer als bei der funknetzbasierten Lokalisierung mittels Lateration oder Mustererkennung. Mithilfe des GPS lassen sich Genauigkeit erreichen, die den bei der Funknetzapproximation erreichbaren Genauigkeiten entsprechen oder geringfügig darüber liegen.

Mit den zuvor beschriebenen Methoden zu funknetzbasierten Lokalisierung und der satellitenstützten Lokalisierung stehen in der Lokalisierungseinrichtung 105 mehrere Verfahren zu Lokalisierung eines Endgeräts 102 zur Verfügung, die eine unterschiedliche Lokalisierungsgenauigkeit ermöglichen. Zur Lokalisierung des Endgeräts 102 wird aus den verfügbaren Lokalisierungsmethoden nach vorgegebenen Kriterien eine Auswahl getroffen. Dabei wird insbesondere die Verfügbarkeit einer funknetzbasierten Lokalisierung ermittelt und gegebenenfalls eine der zur Verfügung stehenden funknetzbasierten Lokalisierungsmethoden ausgewählt. Hierfür werden Informationen herangezogen, die in der Zentraleinrichtung 103 vorliegen bzw. über die Zentraleinrichtung 103 bereitgestellt werden können. Für die Ermittlung der Verfügbarkeit und die Auswahl kann beispielsweise die Lokalisierungseinrichtung 105, welche die Lokalisierung des Endgeräts 102 durchführt, oder die Zentraleinrichtung 103 zuständig sein.

Ein erstes Kriterium für die Auswahl des anzuwendenden Lokalisierungsverfahrens ist die Anzahl von verfügbaren Funkzugangspunkten 101i. Im Falle der endgeräteseitigen Lokalisierung handelt es sich hierbei um die Anzahl von Funkzugangspunkten 101i, deren Funksignale in dem Endgerät 102 an der zu lokalisierenden Position empfangen werden können. Im Falle der netzseitigen Lokalisierung handelt es sich um die Anzahl der Funkzugangspunkte 101i, die Funksignale des Endgeräts 102 empfangen können.

Insbesondere zu Beginn der Lokalisierung eines Endgeräts 102 an einer bestimmten Position kann zunächst anhand der Anzahl der für die Lokalisierung verfügbaren Funkzugangspunkte 101i eine Methode zur Lokalisierung der Position ermittelt werden. Wenn an der betreffenden Position wenigstens ein Funkzugangspunkt 101i für die Lokalisierung verfügbar ist, kommt eine funknetzbasierte Lokalisierung in Betracht. Wenn wenigstens drei Funkzugangspunkte 101i verfügbar sind, kann die Position anhand einer Lateration oder anhand einer Mustererkennung bestimmt werden. Die Auswahl einer dieser Lokalisierungsmethoden kann dabei in einer weiter unten noch beschrieben Weise vorgenommen werden. Wenn zwei Funkzugangspunkte 101i verfügbar sind und eine endgerätseitige Lokalisierung vorgesehen ist, dann wird in einer Ausgestaltung eine Lokalisierung anhand einer Mustererkennung vorgenommen. Ist hingegen lediglich ein Funkzugangspunkt 101i für die Lokalisierung verfügbar, dann sieht eine Ausgestaltung die Lokalisierung anhand der Funknetzapproximation vor. Alternativ kann in diesem Fall jedoch eine Lokalisierung mittels des Satellitenortungsmoduls 107 vorgenommen werden, falls Signale von ausreichend vielen Navigationssatelliten empfangen werden.

Oftmals ist die Lokalisierung nach der erstmaligen Bestimmung der Position eines Endgeräts 102 nicht beendet, sondern die Lokalisierung wird fortgesetzt, um das Endgerät beispielsweise auf dem Weg des Endgerätenutzers zu einem Ziel zu lokalisieren. Im Hinblick hierauf ist vorgesehen, dass die Verfügbarkeit der funknetzbasierten Lokalisierung auch für die Umgebung einer zuvor ermittelten Position eine Lokalisierungsmethode ermittelt wird. Dies kann sowohl nach der erstmaligen Positionsbestimmung erfolgen als auch nach nachfolgenden Positionsbestimmungen. Die Ermittlung der Verfügbarkeit der funknetzbasierten Lokalisierung in einer Umgebung einer bereits bestimmten Position eines Endgeräts 102, erfolgt in einer Ausgestaltung wiederum in Abhängigkeit von einer Anzahl von verfügbaren Funkzugangspunkten 101, d.h. der Anzahl von Funkzugangspunkten, deren Funksignale in dem Endgerät 102 empfangen werden können bzw. die Funksignale des Endgeräts 102 empfangen können. Die Anzahl wird anhand von Informationen geschätzt, die in der Zentraleinrichtung 103 verfügbar sind. Die diesbezügliche Auswertung wird vorzugsweise in der Zentraleinrichtung 103 vorgenommen. Gleichfalls kann jedoch auch eine Auswertung in der Lokalisierungseinrichtung 105 vorgesehen sein, der die benötigten Informationen gegebenenfalls von der Zentraleinrichtung 103 übermittelt werden können.

In einer Ausgestaltung ist vorgesehen, dass die Anzahl für eine oder mehrere Positionen in der Umgebung der zuvor ermittelten Position des Endgeräts 102 geschätzt wird. Diese Positionen haben in einer Ausführungsform eine vorgegebene Entfernung von der zuvor mittels Lokalisierung bestimmten Position des Endgeräts 102. Grundsätzlich kann die Schätzung für eine vorgegebenen Anzahl von Positionen um die zuvor ermittelte Position des Endgeräts 102 herum ausgewertet werden. Vorzugsweise werden dabei nur Positionen berücksichtigt, die zugänglich sind, d.h. Positionen die auf einer begeh- oder befahrbaren Fläche liegen und die von der zuletzt ermittelten Position aus auch erreichbar sind. Die Zugänglichkeit und die Erreichbarkeit können anhand von Kartendaten ermittelt werden, die in der Lokalisierungseinrichtung 105 und/oder in der Zentraleinrichtung 103 vorliegen.

In einer Ausgestaltung wird zur Ermittlung der Positionen für die Schätzung der Anzahl der verfügbaren Funkzugangspunkte 101i zudem eine Bewegungsrichtung des Endgeräts 102 berücksichtigt, wenn eine solche bestimmt werden kann und bestimmt worden ist. Die Bewegungsrichtung kann beispielsweise aus dem Vergleich von zwei zuvor ermittelten Positionen des Endgeräts 102 bestimmt werden. Unter Berücksichtigung der Bewegungsrichtung des Endgeräts 102 können eine oder mehrere Positionen für die Schätzung der Anzahl von verfügbaren Funkzugangspunkten 101i in der vorgegebenen Entfernung von der zuletzt ermittelten Position des Endgeräts 102 ausgewählt werden, die ausgehend von dieser Positionen in Bewegungsrichtung des Endgeräts 102 liegen. Durch die Berücksichtigung der Bewegungsrichtung können die Positionen, für die eine Schätzung der Anzahl verfügbarer Funkzugangspunkte 101i vorgenommen wird, auf wenige Positionen, insbesondere auf eine Position begrenzt werden.

In einer weiteren Ausführungsform kann zudem eine Geschwindigkeit des Endgeräts 102 ermittelt und die Entfernung der untersuchten Positionen zu der zuvor ermittelten Position anhand der Geschwindigkeit ermittelt werden, wobei bei einer höheren Geschwindigkeit eine größere Entfernung gewählt wird. Die Geschwindigkeit kann beispielsweise aus dem Vergleich von Zeitpunkten, zu denen das Endgerät 102 zwei zuvor ermittelte Positionen erreicht hat, und dem Abstand zwischen diesen Positionen ermittelt werden.

Zur Ermittlung der Anzahl von an einer Position für die Lokalisierung verfügbaren Funkzugangspunkten 101i wird in einer Ausgestaltung die Anzahl von Funkzugangspunkten 101i bestimmt, die in einer vorgegebenen Umgebung um die Position angeordnet sind. Die Umgebung kann beispielsweise einer Kreisscheibe mit einem vorgegebenen Radius und der Position als Mittelpunkt entsprechen. Eine Anzahl von verfügbaren Funkzugangspunkten 101i ergibt sich in einer Ausgestaltung aus der Anzahl der Funkzugangspunkte 101i, die in der Zentraleinrichtung 103 mit einer Position innerhalb der zuvor genannten Umgebung registriert sind. Zusätzlich kann gegebenenfalls anhand der von diesen Funkzugangspunkten 101i angegebenen aktuellen Sendeleistungen geprüft werden, ob die Funkzugangspunkte 101i aktuell eingeschaltet sind, wobei in diesem Fall nur die eingeschalteten Funkzugangspunkte 101i bei der Ermittlung der Anzahl berücksichtigt werden. Im Hinblick auf eine endgerätseitige Lokalisierung werden hierdurch vorteilhaft lediglich die Funkzugangspunkte 101i berücksichtigt, von denen aktuell auch Funksignale empfangbar sind.

Ergänzend oder alternativ kann eine Anzahl von verfügbaren Funkzugangspunkten 101i ermittelt werden, die der Anzahl von unterschiedlichen Funkzugangspunkten 101i entspricht, von denen mithilfe der zuvor beschriebenen Messeinrichtungen zur Erfassung von Signalmusterdaten an Positionen in der in der zuvor genannten Umgebung Funksignale empfangen werden. Diese Anzahl kann in der Zentraleinrichtung 103 anhand der Signalmusterdaten ermittelt werden, die von den Funkzugangspunkten 101 gemeldet werden, die mit einer Position innerhalb der betreffenden Umgebung in der Zentraleinrichtung 103 registriert sind.

Wenn die Anzahl der verfügbaren Funkzugangspunkte 101i für alle untersuchten Positionen oder wenigstens für eine vorgegebenen Mindestanzahl von Positionen über einer vorgegebenen Mindestanzahl liegt, dann wird für die weitere Positionsbestimmung des Endgeräts 102 die Verfügbarkeit einer funknetzbasierte Lokalisierung festgestellt. In Ausgestaltungen wird die Verfügbarkeit der funknetzbasierten Lokalisierung festgestellt, wenn wenigstens zwei oder drei Funkzugangspunkte 101i an der untersuchten Position oder den untersuchten Positionen für die Lokalisierung verfügbar sind. Hierdurch wird die Verfügbarkeit der funknetzbasierten Lokalisierung nur dann festgestellt, wenn diese mit einer hohen Genauigkeit durchführt werden kann. Alternativ kann die Verfügbarkeit der funknetzbasierten Lokalisierung auch bereits dann festgestellt werden, wenn an der Position oder den Positionen lediglich ein Funkzugangspunkt 101i für die Lokalisierung verfügbar ist. Dabei kann vorgesehen sein, dass in diesem Fall nur dann die Verfügbarkeit der funknetzbasierten Lokalisierung festgestellt wird, wenn die zuvor ermittelte Position durch eine funknetzbasierte Lokalisierung, insbesondere durch eine Lateration oder Mustererkennung ermittelt worden ist. Auf diese Weise kann die funknetzbasierte Lokalisierung insbesondere beibehalten werden, wenn lediglich an einzelnen Positionen nur ein Funkzugangspunkt 101i empfangbar ist, ansonsten aber eine bessere Funknetzabdeckung des Gebiets, in dem sich das Endgerät 102 befindet, besteht. Darüber hinaus kann die Verfügbarkeit der funknetzbasierten Lokalisierung bei lediglich einem verfügbaren Funkzugangspunkt 101i in der Umgebung der zuletzt ermittelten Position auch dann festgestellt werden, wenn an dieser Position eine satellitengestützte Lokalisierung nicht möglich war. Auf diese Weise wird sichergestellt, dass das Endgerät 102 bei nicht verfügbarer satellitenbasierten Ortung funknetzbasiert lokalisiert werden kann, wenn dies möglich ist.

Infolge der Feststellung, dass die funknetzbasierte Lokalisierung verfügbar ist, wird insbesondere der Funkadapter 104 des Endgeräts 102 aktiviert bzw. eine bestehende Aktivierung des Funkadapters 104 bleibt erhalten. Wird hingegen festgestellt, dass die funknetzbasierte Lokalisierung nicht verfügbar ist, dann wird der Funkadapter 104 vorzugsweise ausgeschaltet, sofern nicht über einen einzelnen Funkzugangspunkt 101i eine Datenverbindung aufgebaut ist. Im letzteren Fall kann jedoch die Suchfunktion des Funkadapters 104 ausgeschaltet werden, mit welcher der Funkadapter 104 durch ein Scanning empfangbare Funkzugangspunkte 101i ermittelt. Durch die Abschaltung des Funkadapters 104 wird der Energieverbrauch des Endgeräts 102 reduziert und in der Folge die Laufzeit der üblicherweise für die Energieversorgung des Endgeräts 102 vorgesehenen Batterie erhöht.

Alternativ oder ergänzend zu der zuvor beschriebenen Ermittlung der Verfügbarkeit der funknetzbasierten Lokalisierung kann eine Auswahl der für die nachfolgende Lokalisierung zu verwenden Lokalisierungsmethode vorgenommen werden. Diese kann - wie auch bei der ersten Lokalisierung - in Abhängigkeit von an der zu lokalisierenden Position in dem Endgerät 102 empfangenen Funksignalen und/oder gegebenenfalls bereits vorab in Abhängigkeit von den Informationen, die zur Ermittlung der Verfügbarkeit der funknetzbasierten Lokalisierung herangezogen werden. Wie zuvor bereits beschrieben, erfolgt eine Lokalisierung anhand einer Mustererkennung oder anhand einer Lateration, wenn wenigstens für die Lokalisierung verfügbare Funkzugangspunkte 101i ermittelt werden. Bei zwei verfügbaren Funkzugangspunkten 101i kann - im Falle einer vorgesehenen endgeräteseitigen Lokalisierung - eine Mustererkennung vorgesehen sein, und eine Funknetzapproximation wird durchgeführt, wenn festgestellt wird, dass lediglich Funksignale eines einzigen Funkzugangspunkts 101 empfangen werden.

Wenn Funksignale von wenigstens drei Funkzugangspunkten 101i verfügbar sind und eine endgerätseitige Lokalisierung durchgeführt wird, wird vorzugsweise durch eine Auswahl bestimmt, ob die Lokalisierung anhand einer Musterkennung oder anhand einer Lateration durchgeführt wird. Die Genauigkeit einer Lokalisierung mittels Lateration ist hoch, wenn die empfangenen Funksignale höchstens in geringem Maße durch Hindernisse gedämpft worden sind, oder ihrer Ausbreitung in anderer Weise gestört worden ist. Beim Vorhandensein von Störfaktoren für die Signalausbreitung ermöglicht jedoch die Mustererkennung in der Regel eine Lokalisierung mit hoher Genauigkeit, da Störungen zur "Individualisierung" der Signalmuster führen. Daher wird zur Auswahl ermittelt, ob sich Funksignale im Bereich der Position des zu lokalisierenden Endgeräts 102 störungsfrei bzw. mit höchsten geringen Störungen ausbreiten können. Wird dies festgestellt, wird eine Lokalisierung anhand einer Lateration durchgeführt. Wird hingegen das Vorhandensein von Störungen festgestellt, dann wird die Musterkennung als Lokalisierungsmethode ausgewählt.

Zur Prüfung des Vorhandenseins von Störungen bei der Signalausbreitung wird die an einer bekannten Position mittels einer Empfangseinrichtung gemessene Signalstärke eines Funksignals wenigstens eines Funkzugangspunkts 101i mit einer erwarteten Signalstärke verglichen. Die Signalstärke kann den Signalmusterdaten entnommen werden, die in einer zuvor beschriebenen Weise mithilfe von Messfahrzeugen, von weiteren Funkzugangspunkten 101i oder in anderer Weise an bekannten Position erfasst werden und die Signalstärke empfangbarer Funkzugangspunkte 101i umfassen. Sofern eine Erfassung mithilfe von Funkzugangspunkten 101i oder anderen stationären Messeinrichtung, die sich an bekannten Positionen befinden, vorgesehen ist, kann die Erfassung der Signalmusterdaten aufgrund der durchzuführen Auswertung auf eine Anforderung der Zentraleinrichtung 103 hin vorgenommen werden. Alternativ kann auf Signalmusterdaten zurückgegriffen werden, die in der Datenbank 106 der Zentraleinrichtung gespeichert sind.

Aus den Positionen für die derartige Signalmusterdaten vorliegen wird in einer Ausgestaltung für die Ermittlung der Signalausbreitungsbedingungen eine Position gewählt, die einer zuvor bestimmten Positionen des Endgeräts 102 am nächsten liegt. Für diese kann die Signalstärke eines der dort empfangbaren Funkzugangspunkte 101i mit einer erwarteten Signalstärke verglichen werden.

Die erwartete Signalstärke wird unter der Annahme einer im Wesentlichen störungsfreien Signalausbreitung in Abhängigkeit von der Sendeleistung des zweiten Funkzugangspunkts 101i bestimmt, die dieser an die Zentraleinrichtung 103 gemeldet hat, sowie in Abhängigkeit von dem Abstand zwischen dem ersten und zweiten Funkzugangspunkt 101i. Der Abstand wird aus den bekannten und in der Zentraleinrichtung 103 hinterlegten Positionen des ersten und des zweiten Funkzugangspunkts 101i berechnet. Für die Berechnung wird eine geeignete näherungsweise mathematische Beschreibung der ungestörten Signalausbreitung herangezogen, die dem Fachmann an sich bekannt ist. Insbesondere kann zur Bestimmung der erwartete Signalausbreitung der sogenannten Pfadverlust, insbesondre der Pfadverlust im freien Raum herangezogen werden, der in einer an sich bekannten Weise berechnet werden kann.

In einer Ausführungsform wird die Lateration als Lokalisierungsmethode ausgewählt, wenn die Abweichung zwischen der gemessenen und der erwarteten Signalstärke einen vorgegebenen Schwellenwert nicht überschreitet, da in diesem Fall von einer weitgehend ungestörten Sichtverbindung für die Funksignalausbreitung zwischen den Funkzugangspunkten 101i auszugehen ist. Ist die Abweichung hingegen größer als der Schwellenwert, dann wird die Mustererkennung als Lokalisierungsmethode ausgewählt.

In einer weiteren Ausgestaltung werden die an der ausgewählten bekannten Position gemessenen Signalstärken von Funksignalen mehrerer zweiter Funkzugangspunkte 101i mit erwarteten Signalstärken verglichen, die jeweils in der zuvor beschriebenen Weise berechnet werden. Zur Lokalisierung des Endgeräts wird in dieser Ausgestaltung nur dann die Lateration ausgewählt, wenn die Abweichung für alle Funksignale oder wenigstens eine vorgegebene Mindestzahl von Funksignalen nicht größer als der Schwellenwert ist. Ist dies nicht der Fall, wird die Musterkennung als Lokalisierungsverfahren ausgewählt.

In weiteren Ausgestaltungen können Vergleiche zwischen erwarteter und gemessener Signalstärke für ein oder mehrere Funksignale auch für mehrere bekannte Positionen in der Umgebung einer zuvor ermittelten Position des Endgeräts durchgeführt werden. Dabei kann vorgesehen sein, dass die Lateration nur dann als die zu verwendende Lokalisierungsmethode ausgewählt wird, wenn für alle oder mehrere Funkzugangspunkte 101i nach den zuvor beschriebenen Kriterien weitgehend ungestörte Sichtverbindungen für die Funksignalübertragung zwischen den Funkzugangspunkten 101i festgestellt worden sind.

Im Fall einer netzseitigen Lokalisierung ist vorgesehen, dass bei wenigstens drei für die Lokalisierung verfügbaren Funkzugangspunkten 101i eine Lateration durchgeführt wird.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen.

In den Patentansprüchen angegebene Bezugszeichen sind nicht als Beschränkungen der eingesetzten Mittel und Schritte anzusehen.

### Bezugszeichen

- 101i: Funkzugangspunkt
- 102: Endgerät
- 103: Zentraleinrichtung
- 104: Funkadapter
- 106: Datenbank
- 105: Lokalisierungseinrichtung
- 107: Satellitenortungsmodul

- 201: Weitverkehrsnetz
- 202: Zugangsserver
- 203: Anbieternetz
- 204: Funkschnittstelle
- 205: Antenne
- 206: Steuereinrichtung

## Patentansprüche

1. Verfahren zum Aktivieren eines Funkadapters (104) in einem Endgerät (102) welches eine Lokalisierungseinrichtung (105) aufweist, nach einer Bestimmung der Position des Endgeräts ohne Gebrauch der Lokalisierungeinrichtung, wobei die Lokalisierungsrichtung dazu ausgestaltet ist, das Endgerät mithilfe von in dem Endgerät empfangenen Funksignalen von Funkzugangspunkten (101) zu lokalisieren, wobei die Aktivierung des Funkadapters (104) in Abhängigkeit von der Anzahl der für eine funknetzbasierte Lokalisierung zur Verfügung stehenden Funkzugangspunkten an einer zweiten Position erfolgt, welche eine vorgegebene Entfernung von der zuvor bestimmten Position entfernt ist, wobei die Entfernung anhand der Geschwindigkeit des Endgeräts ermittelt wird und die zweite Position von der zuletzt ermittelten Position erreichbar ist und in der Bewegungsrichtung des Endgeräts liegt;
wobei die Anzahl der Funkzugangspunkte von denen Funksignale an der zweiten Position empfangen werden können geschätzt wird, indem die Anzahl von Funkzugangspunkten in einer vorgegebenen Umgebung um die zweite Position unter Zuhilfenahme von in einer Zentraleinrichtung gespeicherten Information erfolgt, wobei diese Information alle Funkzugangspunkte mit ihren Positionen umfasst.

2. Verfahren nach einem der vorangegangenen Ansprüche, wobei zur Lokalisierung des Endgeräts mittels eines Funkadapters des Endgeräts die Funkzugangspunkte ermittelt werden, deren Funksignale in dem Endgerät empfangen werden können, und wobei die Ermittlung solcher Funkzugangspunkte mittels des Funkadapters deaktiviert wird, wenn die Lokalisierung mittels der Funksignale nicht aktiviert oder fortgesetzt wird.

3. Verfahren nach einem der vorangegangenen Ansprüche, wobei in der Lokalisierungseinrichtung mehrere Lokalisierungsverfahren zur Lokalisierung des Endgeräts anhand der empfangenen Funksignale ausführbar sind und wobei das ausgeführte Lokalisierungsverfahren in Abhängigkeit von einer Auswertung der mittels der Empfangseinrichtung erfassten Funksignale wenigstens eines Funkzugangspunkts ausgewählt wird.

4. Verfahren nach Anspruch 3, wobei die Lokalisierungsverfahren eine Lateration,
beider Abstände zwischen Funkzugangspunkten und dem Endgerät ermittelt werden, und eine Lokalisierung anhand von Vergleichen eines erfassten Signalmusters mit Referenzsignalmustern umfassen.

5. Verfahren nach Anspruch 3 oder 4, wobei die Auswertung der mittels der Empfangseinrichtung empfangenen Funksignale eines Funkzugangspunkts einen Vergleich einer in der Empfangseinrichtung empfangenen Signalstärke mit einer aufgrund einer Sendeleistung des Funkzugangspunkts erwarteten Signalstärke umfasst.

6. Verfahren nach Anspruch 5, wobei eine Lokalisierung mittels Lateration durchgeführt wird, wenn eine Abweichung zwischen der erfassten Signalstärke und der erwarteten Signalstärke einen vorgegebenen Schwellwert nicht überschreitet.

7. Verfahren nach einem der Ansprüche 3-6, wobei die Sendeleistung des Funkzugangspunkts anhand von Sendeleistungsdaten bestimmt wird, die für die Sendeleistung repräsentativ sind und von dem Funkzugangspunkt gemeldet werden.

8. Verfahren nach einem der vorangegangenen Ansprüche, wobei es sich bei wenigstens einer Empfangseinrichtung um einen ersten Funkzugangspunkt handelt,
wobei der erste Funkzugangspunkt in einem ersten Betriebsmodus betreibbar ist, in dem er als Zugangspunkt zu einem Kommunikationsnetz dient, und wobei der erste Funkzugangspunkt in einem zweiten Betriebsmodus betreibbar ist, in dem Funksignale anderer Funkzugangspunkte erfassbar sind.

9. Verfahren nach einem der vorangegangenen Ansprüche, wobei die Funkzugangspunkte als Wifi-Zugangspunkte Zugangspunkte und/oder als Funkzugangspunkt zu einem Mobilfunknetz ausgebildet sind.

## Claims

1. Method for activating a radio adapter (104) in a terminal device (102) that comprises a localization unit (105), after a determination of the position of the terminal device without using the localization unit, wherein the localization unit is configured to localize the terminal device using radio signals of radio access points (101) received in the terminal device, wherein the activation of the radio adapter (104) occurs at a second position dependent upon the number of radio access points available for radio network-based localization, which second position has a predetermined distance from the previously determined position, wherein the distance is determined based upon the velocity of the terminal device, and the second position is reachable from the last determined position and is in the movement direction of the terminal device;
wherein the number of the radio access points, from which radio signals can be received at the second position, is estimated in that the number of radio access points is effected in a predetermined vicinity around the second position using information stored in a central unit, wherein this information contains all radio access points with their positions.

2. Method according to any one of the preceding claims, wherein for the localization of the terminal device by means of a radio adapter of the terminal device the radio access points, the signals of which can be received in the terminal device, are determined, and wherein the determination of such radio access points by means of the radio adapter is deactivated when the localization by means of the radio signals is not activated or continued.

3. Method according to any one of the preceding claims, wherein multiple localization methods for the localization of the terminal device by means of the received radio signals can be executed in the localization unit, and wherein the executed localization method is selected dependent upon an evaluation of the radio signals of at least one radio access point detected by means of the receiving unit.

4. Method according to claim 3, wherein the localization methods include a multi-lateration, in which distances between radio access points and the terminal device are determined, and a localization by means of comparisons of a detected signal pattern with reference signal patterns.

5. Method according to claim 3 or 4, wherein the evaluation of the radio signals of a radio access point received by means of the receiving unit includes a comparison of a signal strength received in the receiving unit with a signal strength expected due to a transmission power of the radio access point.

6. Method according to claim 5, wherein a localization occurs by means of multi-lateration when a deviation between the detected signal strength and the expected signal strength does not exceed a predetermined threshold value.

7. Method according to any one of claims 3 to 6, wherein the transmission power of the radio access point is determined by means of transmission power data which is representative for the transmission power and which is communicated by the radio access point.

8. Method according to any one of the preceding claims, wherein the at least one receiving unit is a first radio access point, wherein the first radio access point can be operated in a first operating mode in which it serves as an access point to a communication network, and wherein the first radio access point can be operated in a second operating mode in which radio signals of other radio access points can be detected.

9. Method according to any one of the preceding claims, wherein the radio access points are configured as Wifi access points and/or as radio access point to a mobile communications network.

## Revendications

1. Procédé servant à activer un adaptateur radio (104) dans un terminal (102), lequel présente un dispositif de localisation (105), après une définition de la position du terminal sans utilisation du dispositif de localisation, dans lequel le dispositif de localisation est configuré pour localiser le terminal à l'aide de signaux radio de points d'accès radio (101) reçus dans le terminal, dans lequel l'activation de l'adaptateur radio (104) est effectuée en fonction du nombre des points d'accès radio disponibles pour une localisation basée sur un réseau radio au niveau d'une deuxième position, laquelle est éloignée d'un éloignement prédéfini de la position définie au préalable, dans lequel l'éloignement est déterminé à l'aide de la vitesse du terminal et la deuxième position peut être atteinte depuis la position déterminée en dernier lieu et se situe dans la direction de déplacement du terminal ;
dans lequel le nombre des points d'accès radio, depuis lesquels des signaux radio peuvent être reçus au niveau de la deuxième position, est estimé en ce que le nombre de points d'accès radio est effectué dans un environnement prédéfini autour de la deuxième position en recourant à des informations mémorisées dans un dispositif central, dans lequel lesdites informations comprennent tous les points d'accès radio avec leurs positions.

2. Procédé selon la revendication précédente, dans lequel sont déterminés aux fins de la localisation du terminal au moyen d'un adaptateur radio du terminal les points d'accès radio, dont les signaux radio peuvent être reçus dans le terminal et dans lequel la détermination de tels points d'accès radio au moyen de l'adaptateur radio est désactivée quand la localisation n'est pas activée ou poursuit au moyen des signaux radio.

3. Procédé selon l'une quelconque des revendications précédentes, dans lequel plusieurs procédés de localisation servant à localiser le terminal à l'aide des signaux radio reçus peuvent être exécutés dans le dispositif de localisation et dans lequel le procédé de localisation exécuté est choisi en fonction d'une analyse des signaux radio, détectés au moyen du dispositif de réception, d'au moins un point d'accès radio.

4. Procédé selon la revendication 3, dans lequel les procédés de localisation comprennent une trilatération, deux distances entre des points d'accès radio et le terminal étant déterminées, et une localisation à l'aide de la comparaison entre un modèle de signal détecté et des modèles de signal de référence.

5. Procédé selon la revendication 3 ou 4, dans lequel l'analyse des signaux radio, reçus au moyen du dispositif de réception, d'un point d'accès radio comprend une comparaison entre une intensité de signal reçue dans le dispositif de réception et une intensité de signal attendue du fait d'une puissance d'émission du point d'accès radio.

6. Procédé selon la revendication 5, dans lequel une localisation est mise en oeuvre au moyen d'une trilatération, quand un écart entre l'intensité de signal détectée et l'intensité de signal attendue ne dépasse pas une valeur de seuil prédéfinie.

7. Procédé selon l'une quelconque des revendications 3 - 6, dans lequel la puissance d'émission du point d'accès radio est définie à l'aide de données de puissance d'émission, qui sont représentatives de la puissance d'émission et sont notifiées par le point d'accès radio.

8. Procédé selon l'une quelconque des revendications précédentes, dans lequel au moins un dispositif de réception est un premier point d'accès radio, dans lequel le premier point d'accès radio peut fonctionner dans un premier mode de fonctionnement, dans lequel il fait office de point d'accès à un réseau de communication, et dans lequel le premier point d'accès radio peut fonctionner dans un deuxième mode de fonctionnement, dans lequel des signaux radio d'autres points d'accès radio peuvent être détectés.

9. Procédé selon l'une quelconque des revendications précédentes, dans lequel les points d'accès radio sont réalisés en tant que point d'accès Wifi et/ou en tant que point d'accès radio à un réseau de radiotéléphonie mobile.
